Europäisches Patentamt

European Patent Office

Office européen des brevets

(11) Publication number: **0 012 529**
A1

## (12) EUROPEAN PATENT APPLICATION

(21) Application number: **79302655.0**

(22) Date of filing: **21.11.79**

(51) Int. Cl.³: **H 05 H 1/22, H 01 J 7/30**

(30) Priority: **15.12.78 GB 4876278**

(43) Date of publication of application: **25.06.80**
**Bulletin 80/13**

(84) Designated Contracting States: **AT BE CH DE FR GB IT LU NL SE**

(71) Applicant: **EUROPEAN ATOMIC ENERGY COMMUNITY (EURATOM), Batiment Jean Monnet Plateau du Kirchberg Boîte Postale 1907, Luxembourg (LU)**

(72) Inventor: **Field, Jeremy James, 17 Masefield Crescent, Abingdon Oxfordshire (GB)**
Inventor: **Salpietro, Ettore, 63 Norman Avenue, Abingdon, Oxfordshire (GB)**
Inventor: **Minardi, Ettore, 5 Stanfield Close, Headington, Oxfordshire (GB)**

(74) Representative: **Horton, Andrew Robert Grant et al, BOULT, WADE & TENNANT 27 Furnival Street, London, EC4A 1PQ (GB)**

(54) Production of thermonuclear ignition in a plasma.

(57) A method of achieving thermonuclear ignition in a magnetically confined plasma, for example in a tokamak, in which the plasma is initially heated ohmically by the plasma current and subsequently by the injection of neutral beam until the ionic and electronic temperatures are substantially above those required for ignition. In order to increase the mean density of the plasma sufficiently to permit fulfilment of the criterion for ignition, the plasma is supplied with cold neutral gas, namely by gas puffing.

PRODUCTION OF THERMONUCLEAR IGNITION IN A PLASMA

This invention relates to the production of thermonuclear ignition in a plasma. It is primarily intended for use in a machine in which a plasma is magnetically confined in a shape of a toroid; one such machine is a tokamak but although the invention will be particularly described in relation to its use in a tokamak, it is intended that the invention should have utility in other reactors, for example stellarators.

The production of ignition in a plasma, ignition being the condition in which the energy released by thermonuclear fusion in the plasma exceeds all losses of energy from the plasma, requires the confinement of the plasma at a temperature, at which the nuclei are energetic enough to overcome their mutual electrostatic repulsion, for at least a minimum time, known as the energy confinement time.

Ignition requires the quantity $3(n_1+n_2)K(T_i+T_e)/\tau$ to be equal to or less than $n_1n_2(sv)Q$, where $n_1$ and $n_2$ are

the densities of the reacting nuclei, K is Boltzmann's constant, $T_i$ and $T_e$ are the temperatures of the ions and electrons respectively, $\tau$ is the energy confinement time of the plasma, (sv) is the average microscopic cross-section of the thermonuclear reactions (and depends on temperature alone) and Q represents the energy released in the plasma for each fusion reaction. For convenience of explanation, it may be presumed that the plasma is constituted by 50% each of deuterium and tritium, so that $n_1 = n_2 = \frac{n}{2}$. The aforementioned condition then reduces to the condition that $n\tau$ be equal to or greater than

$$\frac{6K(T_i + T_e)}{(sv)Q.}$$

By way of example, ignition for a plasma constituted as aforesaid requires the attainment of a temperature of 12keV and that the quantity $n\tau$ be of the order of $4 \times 10^{20} \, m^{-3} sec.$

The necessary presence of an electric current in a plasma in a tokamak or other magnetic confinement device makes convenient the use of ohmic resistive heating. However, because the conductivity of the plasma varies according to the power of three halves of the temperature, ohmic heating becomes increasingly ineffective as the temperature rises. For example, a temperature corresponding to approximately 3keV is at present a practical limit. Other methods of heating a plasma are known or have been proposed; they include adiabatic compression, radio-frequency heating and the injection of a neutral beam. The last named method, injection of a neutral beam, is capable of producing the temperature required for ignition, but practical limitations on the penetration of the plasma by the injected beam prevent the attainment of a mean density which is sufficiently great for ignition.

Although it might be feasible to increase the density of a toroidal plasma electromagnetically, for example by altering the component of magnetic field normal to the plane of the toroid so as to reduce the orbital radius of the plasma and thereby the nuclear density within it, such an expedient would require an excessively large machine in order to accommodate the radial contraction of the plasma.

According to the present invention, in order to achieve thermonuclear ignition in a confined plasma, the confined plasma is heated to a temperature above that required for ignition at the final density of the plasma and the nuclear density of the plasma is increased by refuelling the plasma with relatively cold gas. It is demonstrable that notwithstanding the fall in temperature during such refuelling, the density of the plasma can be increased sufficiently to ensure that the criterion for ignition is fulfilled.

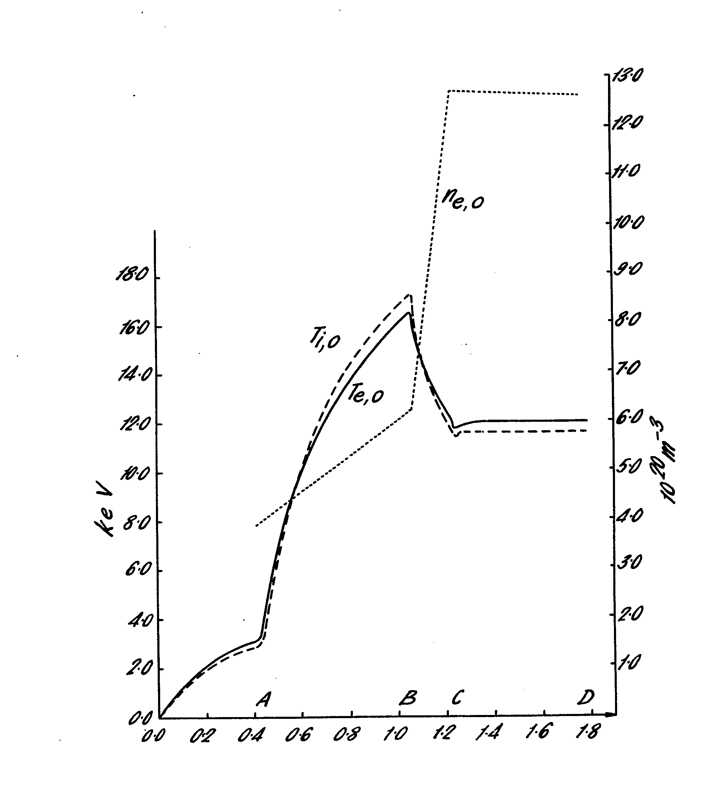

The accompanying Figure illustrates a typical progression of electronic temperature $T_e$, ionic temperature $T_i$ and electronic density n, shown in solid, dashed and dotted lines respectively, against the abscissa of time in, for example, a small ignition tokamak.

It is intended that the method according to the invention should be performed in presently available tokamaks or, mutatis mutandis, other reactors in which ignition is to be attained in a confined plasma; a description of the construction and manner of operation of a tokamak is omitted for the sake of brevity. It will be supposed that the plasma is a mixture of deuterium and tritium as hereinbefore mentioned.

There are four phases in the progression illustrated by the accompanying Figure; the ends of the respective phases are marked by the letters A to D. The precise numbers quoted in the following paragraph are intended to be by way of example only.

The first phase, O to A, is a phase in which the temperature of the plasma is increased by the ohmic resistive heating effect of the electric current in the plasma. Although ohmic heating might not be necessary to the performance of the invention, such a current is normally present in the plasma and is required for the magnetic confinement of the plasma. Accordingly the employment of ohmic heating  is quite convenient. At the end of the first phase, the temperatures $T_i$ and $T_e$ are, for example, 2.88keV and  3.1keV respectively; the mean electronic density is  for example, of the order of 2.3 times $10^{20}$ $m^{-3}$.

At the time A, representing an elapsed time of approximately 400 milliseconds, additional heating is supplied. It is at present preferred that the additional  heating should be by the injection of a neutral beam, for example beam of deuterons at a beam injection energy of 160keV, which is a practical limit at present, and  at a power of, for example, 18 megawatts. During the phase A to B (which occurs at 1.22 seconds) a cold  neutral fuel gas supply should be held steady at the  same value that pertains at the time A until 1.06 seconds from O. The intense beam of deuterons has a significant  effect on the tritium ratio and to obtain an ultimate  value of that ratio during ignition it is desirable to start the  discharge with a high concentration of tritium and to  monitor carefully the tritium ratio of the cold neutral gas surrounding the plasma.

The effect of the neutral beam's heating of the plasma is  quite dramatic and raises the temperatures $T_i$ and $T_e$ to (approximately) 17keV and 16.5keV respectively.

Initially, the neutral beam heats the electron preferentially but after the lapse of about 100 milliseconds, even though alpha particle heating goes preferentially to the electrons, the major source of power during the phase A-B is the beam heating of the ions of the plasma. In consequence $T_i$ is greater than $T_e$. Although some heating by alpha particles produced thermonuclearly will commence during this phase, it will not,in the absence of neutral beam injection heating or an appropriate substitute, increase sufficiently to become the dominant source of heating.

At the time B, cold neutral gas is puffed into the device to increase the density of the plasma in order to satisfy the criterion for ignition. There is, during the phase B-C a drop in temperature because the main power must heat more plasma. There is some increase in ohmic heating owing to the fall in temperature and the nett effect of the changes in temperatures and density is a decrease in transport losses. This phase, B-C is the critical one that determines whether full ignition is reached or not. The supply of cold gas must not be too fast, or else the discharge might be quenched or disrupted, but must proceed sufficiently rapidly to increase the plasma density for satisfaction of the ignition criterion before the temperature falls too far. In the present example the puffing of cold gas ceases at the time  C (1.24 seconds after commencement) when $n_{\tau}$ is approximately 4.2 x 10$^{20}$ m$^{-3}$s. The average density of electrons is  increased, as shown in the Figure, twofold in about 180  milliseconds.

The final phase, C-D, indicates the achievement of ignition and the consequential controlled thermonuclear fusion, selfsustaining nuclear heating balancing all power losses. It further indicates a critical case; if the ignition  criterion is fulfilled at a temperature greater than those indicated, the temperatures $T_i$ and $T_e$ may increase subsequent to the time C.  Whether the plasma is thermally stable after ignition depends on the nature of the power losses; for the case in the figure the assumed loss mechanisms are such that the ignited plasma is thermally stable.

CLAIMS

1. A method of producing thermonuclear ignition in a confined plasma, in which the plasma is heated above the temperature required for ignition and is supplied with cold gas in order to increase the density of the plasma sufficiently for the attainment of ignition.

2. A method according to claim 1, in which the heating of the plasma is performed partly by ohmic heating by current in the plasma and partly by the injection of an energetic neutral beam into the plasma.

## DOCUMENTS CONSIDERED TO BE RELEVANT

| Category | Citation of document with indication, where appropriate, of relevant passages | Relevant to claim |
|---|---|---|
| A | JOURNAL DE PHYSIQUE, Colloque no. C2, supplément au no. 11-12, vol. 34, November-December 1973, pages C2-41-C2-47 Paris, G.B. E. CANOBBIO: "Plasma Heating and its Ignition Problem" <br><br> * Abstract and paragraphs 1,3 * | 1,2 |
| A | REVIEW OF SCIENTIFIC INSTRUMENTS, vol. 49, no. 7, July 1978, pages 948-954 New York, U.S.A. K.H. BURRELL: "Fast hydrogen gas injection system for plasma physics experiments" <br><br> * Abstract; page 948, left-hand column, lines 1-17 * | 1 |
| A | CONF-771129-11 (PRINCETON UNIV. N.J. (U.S.); Plasma Physics Lab.) 20-4 UNLTD Dist; 1977, pages 1-4 D.L. JASSBY: "Fueling by neutral beams" <br><br> * Page 2, paragraph: "Fueling in present-day tokamaks" * | 1,2 |
| A | CONF-771129-8 (PRINCETON UNIV. N.J. (U.S.); Plasma Physics Lab.) 20-4 UNLTD Dist; 1977, pages 1-4 G.L. SCHMIDT et al.: "Gas injection in PLT: Experimental Overview" <br><br> * Page 1, left-hand column, lines 1-17; page 3, right-hand column, lines 20-27 * | 1 |

**CLASSIFICATION OF THE APPLICATION (Int. Cl. 3)**

H 05 H 1/22
H 01 J 7/30

**TECHNICAL FIELDS SEARCHED (Int.Cl. 3)**

H 05 H 1/22
1/02
1/12
1/20

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> The Hague | Date of completion of the search <br> 24-03-1980 | Examiner <br> VILLEMIN | |

EPO Form 1503.1 06.78